# EUROPEAN PATENT APPLICATION

(11) **EP 4 708 089 A1**
(43) Date of publication of application: **11.03.2026**
(21) Application number: 24845766.5
(22) Date of filing: 29.05.2024
(51) Int. Cl.: G06F 21/32, G06F 21/44, G06F 21/64, H04L 9/30, H04L 9/00, G06F 21/45

(54) **SYSTEM FOR AUTHENTICATING USER IN PLURALITY OF ELECTRONIC DEVICES BY USING BIOMETRIC INFORMATION AND CONTROL METHOD THEREFOR**

(30) Priority: 26.07.2023 KR 20230097530
(71) Applicant: Samsung Electronics Co., Ltd., Suwon-si, Gyeonggi-do 16677 (KR)
(72) Inventor: KIM, Jeongmin, Suwon-si Gyeonggi-do 16677 (KR); READING, Dean Nicholas, Mountain View, California 94043 (US); HAJASH, Kathleen Sofia, Mountain View, California 94043 (US); MAHARRAMOV, Musa, Mountain View, California 94043 (US); CHOI, Jaewoong, Suwon-si Gyeonggi-do 16677 (KR)
(74) Representative: Appleyard Lees IP LLP
(86) International application number: PCT/KR2024/007289
(87) International publication number: WO 2025/023462

(57) **Abstract**

Provided are an electronic device and a control method for a system for authenticating the electronic device by using biometric information. The control method includes the operation in which: generating, by a first electronic apparatus , biometric signature information based on first biometric information for authentication of an electronic apparatus and identification information of the first electronic apparatus; transmitting, by the first electronic apparatus, the generated biometric signature information to a server, and broadcasting, by the first electronic apparatus, identification information of the first electronic apparatus; receiving, by a second electronic apparatus, the broadcast identification information, and transmitting, by the second electronic apparatus, the received identification information to the server; transmitting, by the server, the biometric signature information corresponding to the identification information to the second electronic apparatus; generating, by the second electronic apparatus, biometric hash information based on second biometric information acquired by the second electronic apparatus and the biometric signature information, and transmitting, by the second electronic apparatus, the generated biometric hash information and the identification information to the server; and authenticating, by the server, the second electronic apparatus based on the biometric hash information and the identification information.

## Description

### [Technical Field]

This disclosure relates to an electronic apparatus and a control method of a system for which a user is authenticated in another electronic apparatus by using biometric information, and more particularly, to an authentication method by which an electronic apparatus is authenticated based on biometric information and synchronized with another electronic apparatus and a control method of a system for which a user is authenticated in another electronic apparatus by using biometric information.

### [Background Art]

Currently, large numbers of users own various types of electronic apparatuses. Statistics show that people around the world use 3.6 devices per person. Under the circumstances, there is a glowing demand for responding to a user scenario in which services are provided by using various types of electronic apparatuses based on a connection among the electronic apparatuses.

In such a multi-device environment, synchronization of user information among a plurality of electronic apparatuses is a formidable barrier, from a user perspective. Ordinarily, a login is required for an individual service of an individual electronic apparatus, and synchronization is performed through a cloud service. However, this process is complex and requires large numbers of network resources. Additionally, even a link of an electronic apparatus used by an individual with an electronic apparatus communally used by a plurality of users as well as an electronic apparatus used by an individual also causes the above problem.

### [Disclosure of Invention]

### [Solution to Problem]

A control method of a system for authenticating an electronic apparatus by using biometric information, according to one embodiment, includes e generating, by a first electronic apparatus , biometric signature information based on first biometric information for authentication of an electronic apparatus and identification information of the first electronic apparatus; transmitting, by the first electronic apparatus, the generated biometric signature information to a server, and broadcasting, by the first electronic apparatus, identification information of the first electronic apparatus; receiving, by a second electronic apparatus, the broadcast identification information, and transmitting, by the second electronic apparatus, the received identification information to the server; transmitting, by the server, the biometric signature information corresponding to the identification information to the second electronic apparatus; generating, by the second electronic apparatus, biometric hash information based on second biometric information acquired by the second electronic apparatus and the biometric signature information, and transmitting, by the second electronic apparatus, the generated biometric hash information and the identification information to the server; and authenticating, by the server, the second electronic apparatus based on the biometric hash information and the identification information.

The biometric signature information includes identification information of the first electronic apparatus, an algorithm for generating biometric hash information, information associated with a first public key for authenticating biometric signature information, and information associated with a second public key for synchronizing between electronic apparatuses.

The method comprising generating, by the first electronic apparatus, a verification code including biometric hash information for comparing with biometric hash information generated by the second electronic apparatus, and transmitting, the first electronic apparatus, the generated verification code together with the biometric signature information to the server.

The method comprising verifying, by the second electronic apparatus, integrity of the received identification information based on information associated with the second public key included in biometric signature information received from the server.

The method identifying, by the second electronic apparatus, whether a type of the second biometric information is identical with a type of the first biometric information included in the biometric signature information based on acquisition of the second biometric information after verification of integrity of the received identification information.

The transmitting the generated biometric hash information and the identification information to the serer comprising: based on a type of the second biometric information being identical with a type of the first biometric information, generating, by the second electronic apparatus, the biometric hash information according to the second biometric information and the algorithm included in the biometric signature information; and transmitting, by the second electronic apparatus, the generated biometric hash information and the identification information to the server.

The authenticating comprising: identifying, by the server, whether biometric hash information acquired by driving a verification code corresponding to the identification information matches biometric hash information generated by the second electronic apparatus; and authenticating, by the server, the second electronic apparatus based on the identification result.

The method, based on authentication of the second electronic apparatus, transmitting, by the second electronic apparatus, a signal for requesting synchronization to the first electronic apparatus; and performing, by the first electronic apparatus, synchronization with the second electronic apparatus in response to the signal.

The server may be comprised of distributed ledger-based blockchain nodes, and the identification information and the biometric signature information may be registered in a distributed ledger on the blockchain in a way that the identification information and the biometric signature information are paired with each other.

Meanwhile, an electronic apparatus according to one embodiment includes a communication interface, memory, and a processor. The processor receives, based on another electronic apparatus generating biometric signature information according to first biometric information for authentication of an electronic apparatus and identification information of the another electronic apparatus, identification information of the another electronic apparatus from the another electronic apparatus through the communication interface. The processor transmits the received identification information to a server through the communication interface. The processor receives the biometric signature information corresponding to the identification information from the server through the communication interface. The processor generates, based on acquisition of second biometric information, biometric hash information for authenticating the electronic apparatus according to the acquired second biometric information and the biometric signature information. The processor transmits the generated biometric hash information and the identification information to the server through the communication interface.

The biometric signature information may include identification information of the another electronic apparatus, an algorithm for generating biometric hashed information, information associated with a first public key for authenticating biometric signature information, and information associated with a second public key for synchronizing between electronic apparatuses.

The another electronic apparatus may generate a verification code including biometric hash information for comparing with biometric hash information generated by the electronic apparatus, and transmit the generated verification code together with the biometric signature information to the server.

The processor may verify, based on information associated with the second public key included in biometric signature information received from the server, integrity of the received identification information.

The processor may identify, based on acquisition of the second biometric information after verification of integrity of the received identification information, whether a type of the second biometric information is identical with a type of the first biometric information included in the biometric signature information.

The processor may generate, based on a type of the second biometric information being identical with a type of the first biometric information, the biometric hash information according to the second biometric information and the algorithm included in the biometric signature information, and transmit the generated biometric hash information and the identification information to the server through the communication interface.

The server may identify whether biometric hash information acquired by driving a verification code corresponding to the identification information matches biometric hash information generated by the electronic apparatus, and authenticate, based on the identification result, the electronic apparatus.

The processor may transmit, based on the server authenticating the electronic apparatus, a signal for requesting synchronization to the another electronic apparatus through the communication interface, and the another electronic apparatus may perform synchronization with the electronic apparatus in response to the signal.

The server may be comprised of distributed ledger-based blockchain nodes, and the identification information and the biometric signature information may be registered in a distributed ledger on the blockchain in a way that the identification information and the biometric signature information are paired with each other.

### [Brief Description of Drawings]

FIG. 1 is a view illustrating a system for authenticating an electronic apparatus by using biometric information, according to one embodiment;
FIG. 2 is a flowchart provided to explain a control method of a first electronic apparatus for transmitting biometric signature information and broadcasting identification information, according to one embodiment;
FIG. 3 is a flowchart provided to explain a control method of a server for authenticating a second electronic apparatus, according to one embodiment;
FIG. 4 is a flowchart provided to explain a control method of a second electronic apparatus for performing synchronization with a first electronic apparatus, according to one embodiment;
FIG. 5 is a sequence diagram provided to explain a control method of a system for authenticating a second electronic apparatus based on biometric information and synchronizing a first electronic apparatus with the second electronic apparatus, according to one embodiment;
FIG. 6 is a block diagram illustrating a configuration of an electronic apparatus, according to one embodiment; and
FIG. 7 is a block diagram illustrating a configuration of a server, according to one embodiment.

### [Mode for Invention]

Embodiments of the present disclosure may be modified in various different forms, and may vary. Accordingly, specific embodiments are illustrated in the drawings, and described in the detailed description. However, it is to be understood that the embodiments set forth herein are not intended to limit the scope of the matter of the disclosure and are interpreted as including various modifications, equivalents and/or alternatives thereof. In the drawings, like reference numerals may be used to indicate like elements.

In describing the disclosure, if detailed descriptions of known functions or configurations to which the disclosure pertains make the gist of the disclosure unnecessarily vague, the descriptions are omitted.

Additionally, the embodiments described hereafter may be modified in various different forms, and it is to be understood that the scope of the technical spirit of the disclosure is not limited to the embodiments. Rather, the embodiments are provided to make the disclosure thorough and complete and to fully convey the technical spirit of the disclosure to those skilled in the art.

The terms set forth herein are merely used to describe specific examples, and are not intended to limit the scope of the rights for which protection is sought. Unless explicitly stated otherwise, singular forms include plural forms as well.

In the disclosure, expressions such as "have," "may have," "include," or "may include," and the like are used to indicate the presence of a corresponding feature (e.g., a numerical value, a function, an action, or an element such as a component and the like), and do not imply the exclusion of the presence of additional features.

In the disclosure, expressions such as "A or B," "at least one of A or/and B," or "one or more of A or/and B," and the like may include all possible combinations of the items listed together. For example, "A or B," "at least one of A and B," or "at least one of A or B" may refer to all cases including (1) at least one A, (2) at least one B, or (3) both of at least one A and at least one B.

In the disclosure, expressions such as "1st," "2nd," "first," or "second," and the like may be used to refer to various elements regardless of their order and/or importance, and may be merely used to differentiate one element from another but not intended to limit the elements.

Based on one element (e.g., a first element) referred to as being "(operatively or communicatively) coupled with/to or connected with/to" another element (e.g., a second element), it is to be understood that one element may be connected to another element directly or through yet another element (e.g., a third element).

On the other hand, based on one element (e.g., a first element) referred to as being "directly coupled with/to or connected with/to" another element (e.g., a second element), it is to be understood that yet another element (e.g., a third element) is not present between one element and another element.

The expression "configured to (or set to) ..." used herein may be used interchangeably with, for example, "suitable for ...," "having the capacity to ...," "designed to ...," "adapted to ...," "made to ...," or "capable of ..." depending on circumstances. The term "configured to (or set to) ..." may not necessarily mean "specifically designed to ..." in a hardware manner.

Instead, in a certain situation, the expression "a device configured to ..." may mean "being capable of performing ..." by the device together with another device or other components. For example, the phrase "a processor configured (or set) to perform A, B and C" may mean an exclusive processor (e.g., an embedded processor) for performing corresponding functions, or a generic-purpose processor (e.g., a CPU or an application processor) capable of performing corresponding functions by executing one or more software programs stored in a memory device.

In the embodiments, the term "module" or "unit" may perform at least one function or operation, and be implemented by hardware or software or by a combination of hardware and software. Additionally, multiple "modules" or multiple "units" may be integrated into at least one module and be implemented as at least one processor except for a "module" or a "unit" that needs to be implemented by specific hardware.

Meanwhile, various elements and regions in the drawings are schematically illustrated. Accordingly, the technical spirit of the disclosure is not limited by relative sizes or distances illustrated in the accompanying drawings.

Hereafter, the embodiments of the disclosure are described in detail with reference to the drawings such that those skilled in the art to which the subject matter of the disclosure pertains may implement the embodiments readily.

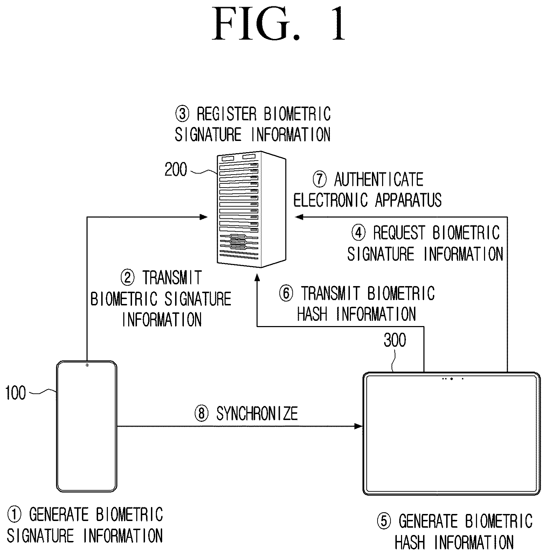

FIG. 1 is a view illustrating a system for authenticating an electronic apparatus by using biometric information, according to one embodiment. A system 10 may include a first electronic apparatus 100, a server 200, and a second electronic apparatus 300. At this time, the first electronic apparatus 100 (or a main electronic apparatus) and the second electronic apparatus 300 (or a sub electronic apparatus) may be implemented as user terminals such as a smartphone, a tablet PC, a laptop PC and the like, but the user terminals are described merely as examples, and the first electronic apparatus and the second electronic apparatus may be implemented as home appliances such as a smart TV, a refrigerator, a washing machine and the like. Additionally, FIG. 1 shows one second electronic apparatus 300, but is illustrated merely as one example, and a plurality of second electronic apparatuses 300 may be implemented. Certainly, a plurality of servers 200 may also be implemented.

The first electronic apparatus 100 generates biometric signature information (or biometric signature generation information) (①). At this time, the biometric signature information, as information for generating biometric hash information for authenticating an electronic apparatus used by a user the same as a user of the first electronic apparatus 100, may include identification information of the first electronic apparatus 100, an algorithm for generating biometric hashed information, information associated with a first public key for authenticating biometric signature information and information associated with a second public key for synchronizing between electronic apparatuses.

The first electronic apparatus 100 transmits the biometric signature information to the server 200 (②). At this time, the first electronic apparatus 100 may also transmit a verification code (or a smart contract code). The verification code, as a code for verifying biometric hash information generated by the second electronic apparatus 300, may include biometric hash information for comparing with the biometric hash information generated by the second electronic apparatus 300.

Further, the first electronic apparatus 100 may broadcast the identification information of the first electronic apparatus 100 to transmit the identification information of the first electronic apparatus 100 to the second electronic apparatus 300 placed around the first electronic apparatus 100.

The server 200 registers the biometric signature information in the server 200 (③). At this time, the server 200 may be comprised of distributed ledger-based blockchain nodes. Additionally, the server 200 may register the identification information and the biometric signature information of the first electronic apparatus 100 in a distributed ledge on a blockchain in the way that the identification information and the biometric signature information are paired with each other.

Meanwhile, the second electronic apparatus 300 may receive the identification information of the first electronic apparatus 100 broadcast by the first electronic apparatus 100.

Additionally, the second electronic apparatus 300 requests the biometric signature information from the server 200 (④). Specifically, the second electronic apparatus 300 may transmit, to the server 200, a request signal including the identification information of the first electronic apparatus 100 received from the first electronic apparatus 100.

The server 200 may transmit, to the second electronic apparatus 300, the biometric signature information corresponding to the identification information of the first electronic apparatus 100 included in the request signal.

The second electronic apparatus 300 uses second biometric information acquired by the second electronic apparatus 300 and the biometric signature information received from the server 200 to generate biometric hash information (⑤). At this time, the biometric hashed information, as information generated by a biometric hashed algorithm included in the biometric signature information, may also be referred to as a biometric hashed value.

The second electronic apparatus 300 transmits the biometric hash information to the server 200 (⑥).

The server 200 authenticates the second electronic apparatus 300 based on the biometric hash information received from the second electronic apparatus 300 (⑦). Specifically, the server 200 may compare the biometric hash information received from the second electronic apparatus 300 with the biometric hash information generated by the verification code to authenticate the second electronic apparatus 300. Additionally, the server 200 may transmit an authentication result to the second electronic apparatus 300.

The second electronic apparatus 300 performs synchronization with the first electronic apparatus 100 based on the authentication result (⑧). Specifically, in the case where the second electronic apparatus 300 is authenticated, the second electronic apparatus 300 may use a synchronization public key to transmit synchronization information of the second electronic apparatus 300 to the first electronic apparatus 100, and the first electronic apparatus 100 and the second electronic apparatus 300 may perform synchronization through a synchronization protocol. At this time, the synchronization process may refer a task of transceiving information (or data) between electronic apparatuses and updating the information stored in the electronic apparatuses to ensure it is the most up-to-date.

According to the embodiment described above, even in the case where biometric information, as sensitive information of users, itself is not stored in a server, a plurality of electronic apparatuses may perform biometric authentication of an identical user, and based on a result of the biometric authentication, may synchronize the electronic apparatuses.

Since the electronic apparatuses are authenticated and synchronized based on the biometric information, an experience of a user using a plurality of electronic apparatuses with a biometric recognition sensor, around the user, may improve significantly.

Additionally, unlike existing authentication servers, the server 200 using a distributed ledger may be established to provide a fair authentication environment to platform participants.

Further, the first electronic apparatus 100 of a user may generate new biometric signature information, and register the new biometric signature information in the distributed ledger, to perform re-settings readily.

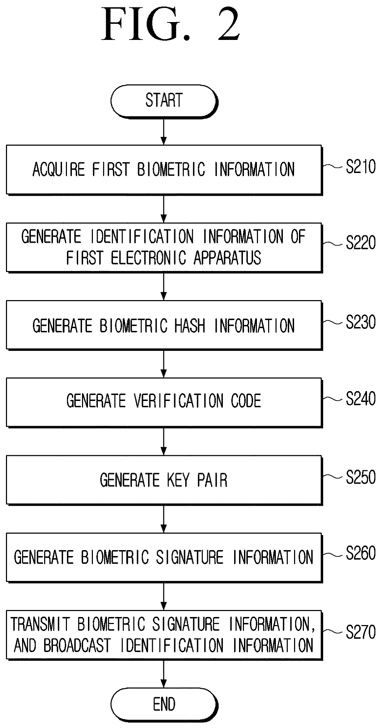

FIG. 2 is a flowchart provided to explain a control method of a first electronic apparatus for transmitting biometric signature information and broadcasting identification information, according to one embodiment.

The first electronic apparatus 100 may acquire first biometric information (S210). Specifically, the first electronic apparatus 100 may acquire the first biometric information through various types of biometric recognition sensors (e.g., a fingerprint sensor, a camera and the like). At this time, the first electronic apparatus 100 may acquire at least one of various types of biometric information such as fingerprint information, iris information, face information, voice information and the like.

The first electronic apparatus 100 may generate identification information of the first electronic apparatus 100 (S220). Specifically, the first electronic apparatus 100 may use at least one of a device ID of the first electronic apparatus, an International Mobile Equipment Identity (IMEI)-based value, a generation value in a trust zone, and a timestamp for generation time to acquire the identification information. In particular, the first electronic apparatus 100 may use a different value to acquire the identification information, each time when re-registration is performed or depending on the sort of service. At this time, the generated identification information of the first electronic apparatus 100 may be used in a synchronization process.

The first electronic apparatus 100 may generate biometric hash information (S230). Specifically, the first electronic apparatus 100 may define an algorithm generating unique biometric hash information from the input first biometric information, and generate the biometric hashed information. First, the first electronic apparatus 100 may determine a value of a relative coordinate rather than an absolute value of the input first biometric information, and define an allowable value range of a difference thereof. In the case where the input first biometric information is in the allowable value range, the first electronic apparatus 100 may define a basic template value of the first biometric information based on a combination of binary values. Additionally, the first electronic apparatus 100 may define an operation for generating a seed value through a binary operation using the basic template value together with the biometric identification information of the first electronic device (100) generated in step S220.. Further, the first electronic apparatus 100 may define a combination of a hash operation to which the seed value is to be applied, overlap times and an overlap method, and salt values. The first electronic apparatus 100 may store the process defined as described above as an algorithm for generating biometric hashed information. Furthermore, the first electronic apparatus 100 may apply the first biometric information acquired in step 210 to the algorithm to generate the biometric hashed information.

The first electronic apparatus 100 may generate a verification code (S240). At this time, the first electronic apparatus 100 may generate a verification code to be used in the process of authenticating an electronic apparatus, which is to be performed by the server 200 (or a biometric authentication server). At this time, the verification code may receive biometric hash information received from the second electronic apparatus 300 as an input value and compare the received biometric hash information with biometric hash information included in the verification code. At this time, even in the case where the verification code, as a code executed in the distributed ledger of the server 200, is revealed, no problem is caused in a verification process.

The first electronic apparatus 100 may generate a key pair (S250). At this time, the first electronic apparatus 10 may generate information associated with a first public key for biometric signature authentication and information associated with a second public key for synchronization between electronic apparatuses. The first public key may be used to verify integrity of biometric information, and the second public key may be used to verify integrity of communication with the first electronic apparatus 100.

At this time, the first public key and the second public key may determine the sort of public key algorithm, the sort of hash, and a salt value and the like. At this case, the determined information may be included in biometric signature information. Additionally, a secret key among the first public key and the second public key may be stored in a place such as a trust zone and the like inaccessible from the outside.

The first electronic apparatus 100 may use the information generated in steps 210-250 to generate biometric signature information (S260). At this case, the biometric signature information may include identification information of the first electronic apparatus 100, an algorithm for generating biometric hashed information, information associated with the first public key (the sort of public key algorithm for biometric authentication and information relating thereto, and a first public key value), information associated with the second public key (the sort of public key algorithm for synchronization and information relating thereto, and a second public key value), a signature value where hash of the above particulars is signed as a personal key for biometric authentication, and the like.

The first electronic apparatus 100 may transmit the biometric signature information to the server 200, and broadcast the identification information of the first electronic apparatus 100 (S270). At this time, the first electronic apparatus 100 may transmit the biometric signature information to the server 200 through a first communication interface (e.g., long-distance communication interfaces such as a LTE module, a 5G module, a Wi-Fi module and the like), and broadcast the identification information of the first electronic apparatus 100 through a second communication interface (e.g., short-distance communication interfaces such as a Bluetooth module, a Wi-Fi Direct module, a UWB module and the like), but not be limited thereto.

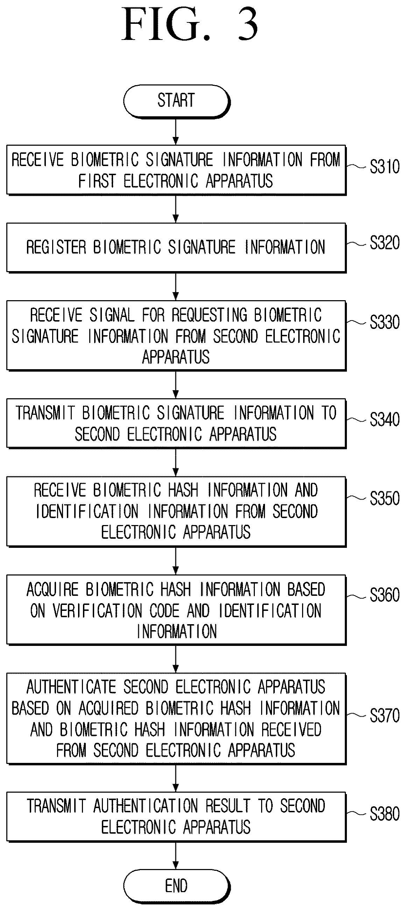

FIG. 3 is a flowchart provided to explain a control method of a server for authenticating a second electronic apparatus, according to one embodiment.

The server 200 may receive biometric signature information from the first electronic apparatus 100 (S310). At this time, the server 200 may receive the biometric signature information from the first electronic apparatus 100, and receive a verification code together at the same time as the server 200 receives the biometric signature information or before or after the server 200 receives the biometric signature information.

The server 200 may register the biometric signature information (S320). Specifically, the server 200 may be comprised of distributed ledger-based blockchain nodes. At this time, the server 200 may pair the biometric signature information with identification information to register the paired information in a distributed ledge on a blockchain. At this time, it does not matter if the biometric signature information as public information is revealed, but the biometric signature information may be registered on the blockchain to block the possibility of tampering.

The server 200 may receive a signal for requesting biometric signature information from the second electronic apparatus 300 (S330). The signal for requesting biometric signature information may include the identification information of the first electronic apparatus 100 broadcast by the first electronic apparatus 100.

The server 200 may transmit the biometric signature information to the second electronic apparatus 300 (S340). Specifically, the server 200 may search biometric signature information paired with the identification information of the first electronic apparatus 100, and transmit the searched biometric signature information to the second electronic apparatus 300.

The server 200 may receive biometric hash information and identification information from the second electronic apparatus 300 (S350). Specifically, as the second electronic apparatus 300 generates biometric hash information based on the biometric signature information, the server 200 may receive the identification information of the first electronic apparatus 100 together with the biometric hash information from the second electronic apparatus 300.

The server 200 may acquire the biometric hash information based on the verification code and the identification information (S360). The server 200 may input the identification information received from the second electronic apparatus 300 to the verification code received from the first electronic apparatus 100 to acquire the biometric hashed information.

The server 200 may authenticate the second electronic apparatus 300, based on the biometric hash information acquired according to the verification code and the identification information and based on the biometric hash information received from the second electronic apparatus 300 (S370). Specifically, the server 200 may compare the acquired biometric hash information with the biometric hash information received from the second electronic apparatus 300. In the case where the acquired biometric hash information matches the biometric hash information received from the second electronic apparatus 300, the server 300 may authenticate the second electronic apparatus 300.

The server 200 may transmit an authentication result to the second electronic apparatus 300 (S380). In other words, the server 200 may transmit an authentication result including a result of authentication success or authentication failure to the second electronic apparatus 300.

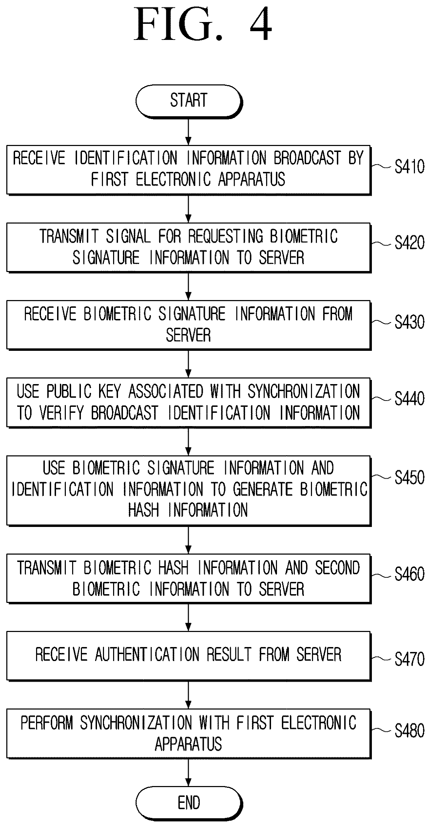

FIG. 4 is a flowchart provided to explain a control method of a second electronic apparatus for performing synchronization with a first electronic apparatus, according to one embodiment.

The second electronic apparatus 300 may receive identification information of the first electronic apparatus 100 broadcast by the first electronic apparatus 100 (S410). At this time, the second electronic apparatus 300 may receive the identification information of the first electronic apparatus 100 through a short-distance communication interface.

The second electronic apparatus 300 may transmit a signal for requesting biometric signature information to the server 200 (S420). The signal for requesting biometric signature information may include the identification information of the first electronic apparatus 100.

The second electronic apparatus 300 may receive the biometric signature information from the server 200 (S430). Specifically, the second electronic apparatus 300 may receive biometric signature information corresponding to the identification information of the first electronic apparatus 100 from the server 200.

The second electronic apparatus 300 may use a public key (i.e., a second public key) associated with synchronization included in the biometric signature information to verify the broadcast identification information (S440). Specifically, in the case where no biometric signature information corresponds to the identification information of the first electronic apparatus 100 or a synchronization signature using a second public key does not match , the second electronic apparatus 300 may identify the first electronic apparatus 100 as an attacker and ignore the broadcasting of the first electronic apparatus 100. However, in the case where the synchronization signature using a second public key matches, the second electronic apparatus 300 may verify the integrity of the identification information broadcast from the first electronic apparatus 100.

The second electronic apparatus 300 may use biometric signature information and second biometric information to generate biometric hash information (S450). As one embodiment, the second electronic apparatus 300 may acquire second biometric information of a user through a biometric recognition sensor. As one embodiment, the second electronic apparatus 300 may pre-store second biometric information of a user.

Specifically, the second electronic apparatus 300 may identify whether the type of second biometric information is identical with the type of first biometric information included in biometric signature information. Additionally, in the case where the type of second biometric information is identical with the type of first biometric information, the second electronic apparatus 300 may input the biometric information to an algorithm for generating biometric hash information included in the biometric signature information, to generate biometric hashed information. At this time, the generated biometric hashed information, as a value generated based on application of a seed value and repetition and combination of a hash function, may be a safe value that cannot be backtracked although the biometric hash information is revealed. Meanwhile, generating the biometric hash information by the second electronic apparatus 300 in the case where the type of first biometric information is identical with the type of second biometric information is described above, but described merely as one example, and even in the case where the type of first biometric information is different from the type of second biometric information, the technical spirit of the disclosure may also be applied. In other words, By multiplexing biometric signature information, synchronization with the second electronic apparatus 300 having partial types of sensors is enabled.

The second electronic apparatus 300 may transmit biometric hash information and identification information to the server 200 (S460). At this time, the server 200, as described in steps 360 and 370 of FIG.3, may compare the biometric hash information received from the second electronic apparatus 300 with the biometric hash information generated by the verification code to authenticate the second electronic apparatus 300.

The second electronic apparatus 300 may receive an authentication result from the server 200 (S470).

The second electronic apparatus 300 may perform synchronization with the first electronic apparatus 100 based on the authentication result received from the server 200 (S480).

Specifically, as the second electronic apparatus is authenticated, the second electronic apparatus 300 may transmit a signal for requesting synchronization to the first electronic apparatus 100, and the first electronic apparatus 100 may perform synchronization with the second electronic apparatus 300 in response to the signal. The synchronization process involves transceiving data between the first electronic apparatus 100 and the second electronic apparatus 300 for an update with latest information, and based on the synchronization process, information such as mails, contact information, pictures, a calendar and the like may be updated.

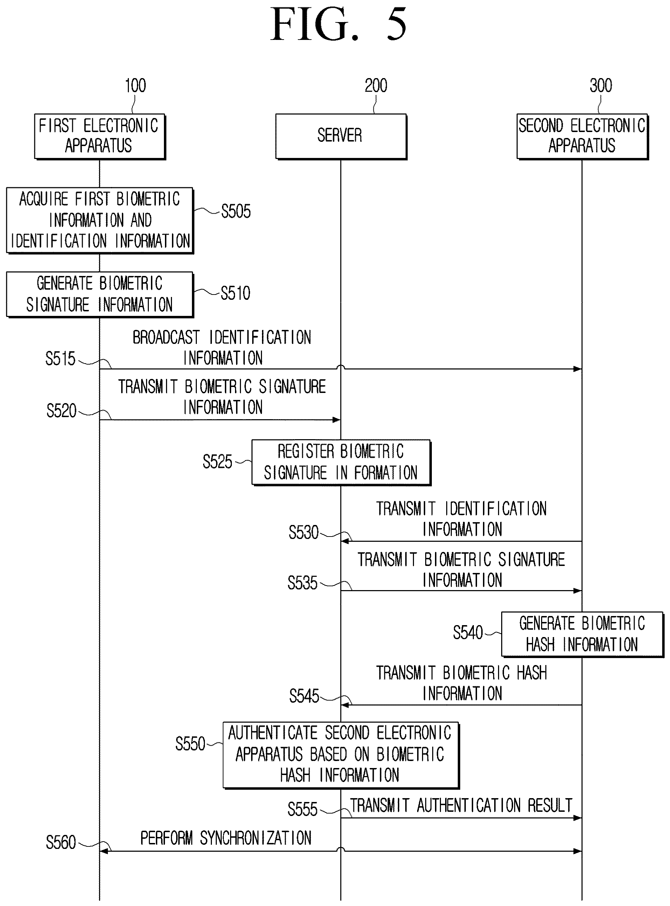

FIG. 5 is a sequence diagram provided to explain a control method of a system for authenticating a second electronic apparatus based on biometric information and synchronizing a first electronic apparatus with the second electronic apparatus, according to one embodiment.

The first electronic apparatus 100 may acquire first biometric information and identification information (S505). Specifically, the first electronic apparatus 100 may acquire the first biometric information through a biometric recognition sensor, and based on information (e.g., a device ID, an International Mobile Equipment Identity (IMEI)-based value, a generation value in a trust zone, a timestamp for generation time and the like) associated with the first electronic apparatus 100, acquire the identification information.

The first electronic apparatus 100 may generate biometric signature information based on the biometric information and the identification information (S510). The biometric signature information may include information for biometric authentication and synchronization with the second electronic apparatus 300 later, without including biometric information of a user as it is. Specifically, the biometric signature information may include identification information of the first electronic apparatus 100, an algorithm for generating biometric hashed information, information associated with a first public key for authenticating biometric signature information and information associated with a second public key for synchronization between electronic apparatuses. Additionally, the first electronic apparatus 100 may generate a verification code for verifying biometric hash information together with a biometric signature.

The first electronic apparatus 100 may broadcast the identification information (S515). At this time, the first electronic apparatus 100 may broadcast the identification information through a short-distance communication interface.

Additionally, the first electronic apparatus 100 may transmit the biometric signature information to the server 200 (S520). At this time, the first electronic apparatus 100 may transmit, to the server 200, the verification code together with the biometric signature information through a long-distance communication interface.

The server 200 may register the biometric signature information (S525). At this time, the server 200 may be comprised of distributed ledger-based blockchain nodes, and the biometric signature information and the identification information of the first electronic apparatus 100 may be registered in a distributed ledger on a blockchain in the way that the biometric signature information and the identification information are paired with each other. In particular, since the server 200 includes a plurality of nodes as a distributed ledger-based blockchain, the server 200 is strongly resistant against tampering, and enables the addition of a new node or the removal of an existing node freely.

The second electronic apparatus 300 may transmit, to the server 200, the identification information of the first electronic apparatus 100 received from the first electronic apparatus 100 (S530).

The server 200 may transmit, to the second electronic apparatus 300, the biometric signature information corresponding to the identification information of the first electronic apparatus 100 (S535).

The second electronic apparatus 300 may generate biometric hash information (S540). Specifically, the second electronic apparatus 300 may input second biometric information acquired by the second electronic apparatus 300 to an algorithm included in the biometric signature information to generate the biometric hashed information.

The second electronic apparatus 300 may transmit the biometric hash information to the server 200 (S550).

The server 200 may authenticate the second electronic apparatus 300 based on the biometric hash information (S555). Specifically, the server 200 may compare the biometric hash information acquired based on the verification code and the identification information with the biometric hash information received from the second electronic apparatus 300. In the case where the acquired biometric hash information matches the biometric hash information received from the second electronic apparatus 300, the server 200 may authenticate the second electronic apparatus 300.

The server 200 may transmit an authentication result to the second electronic apparatus 300 (S560).

The second electronic apparatus 300 may perform synchronization with the first electronic apparatus 100 based on the authentication result received from the server 200 (S565).

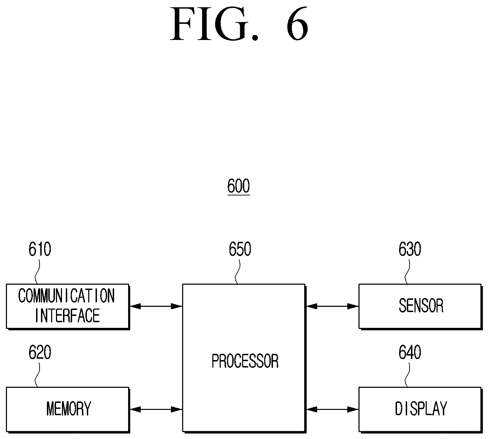

FIG. 6 is a block diagram illustrating a configuration of an electronic apparatus 600, according to one embodiment. As illustrated in FIG. 6, the electronic apparatus 600 may include a communication interface 610, memory 620, a sensor 630, a display 640 and a processor 650. However, the elements are described merely as one example, and depending on the type of electronic apparatus 600, some of the elements may certainly be removed or added. For example, the electronic apparatus 600 may include an additional element such as a biometric recognition sensor, a display and the like. Meanwhile, the electronic apparatus 600 illustrated in FIG.6 may be the second electronic apparatus 300 described with reference to FIGS. 1-5, but the second electronic apparatus 300 is described merely as one example, and the electronic apparatus 600 may be the first electronic apparatus 100.

The communication interface 610 may include at least one circuit, and communicate with various types of external electronic apparatuses or servers. The communication interface 610 may include at least one of a Bluetooth Low Energy (BLE) module, a Wi-Fi communication module, a cellular communication module, a 3G (third generation) mobile communication module, a 4G (fourth generation) mobile communication module, a fourth generation Long Term Evolution (LTE) communication module, and a 5G (fifth generation) mobile communication module.

In particular, the communication interface 610 may include two types of communication interfaces. For example, the communication interface 610 may include a long-distance communication interface for communicating with the server 200 and a short-distance communication interface for communicating with another electronic apparatus. The long-distance communication interface may include a Wi-Fi communication module, a cellular communication module, a 3G (third generation) mobile communication module, a 4G (fourth generation) mobile communication module, a fourth generation Long Term Evolution (LTE) communication module, a 5G (fifth generation) mobile communication module and the like, while the short-distance communication interface may include a Bluetooth Low Energy (BLE) module, a Wi-Fi communication module, a Wi-Fi Direct communication module, a UWB module and the like.

In the case where the electronic apparatus 600 of FIG. 6 is the first electronic apparatus 100, the communication interface 610 may transmit biometric signature information to the server 200. Additionally, the communication interface 610 may broadcast identification information of the first electronic apparatus 100.

In the case where the electronic apparatus 600 of FIG. 6 is the second electronic apparatus 300, the communication interface 610 may receive the identification information of the first electronic apparatus 100 broadcast by the first electronic apparatus 100. Additionally, the communication interface 610 may transmit the identification information of the first electronic apparatus 100 to the server 200, and receive biometric signature information corresponding to the identification information of the first electronic apparatus 100 from the server 200. Further, the communication interface 610 may transmit biometric hash information generated based on the biometric signature information to the server 200, and receive an authentication result from the server 200. Furthermore, the communication interface 610 may transceive data with the first electronic apparatus 100 to perform synchronization based on the authentication result.

The memory 620 may store an operating system (OS) for controlling entire operations of the elements of the electronic apparatus 600 and instructions or data associated with the elements of the electronic apparatus 100. In particular, the memory 620 may include various types of modules for performing a function for performing synchronization with another electronic apparatus by authenticating the electronic apparatus 600. As the function for performing synchronization with another electronic apparatus is executed by authenticating the electronic apparatus 600, the electronic apparatus 600 may load, into volatile memory, data on various types of modules for performing synchronization with another electronic apparatus by authenticating the electronic apparatus 600 stored in non-volatile memory. Herein, the loading process may refer calling data stored in non-volatile memory into volatile memory and storing the data such that at least one processor 650 may access the data.

Meanwhile, the memory 620 may be implemented as non-volatile memory (e.g., a hard disk, solid state drive (SSD), flash memory), volatile memory (may include memory in the processor 650) and the like.

In the case where the electronic apparatus 600 of FIG. 6 is the first electronic apparatus 100, the memory 620 may store biometric signature information generated based on first biometric information and identification information. Additionally, the memory 620 may store identification information of the first electronic apparatus 100.

In the case where the electronic apparatus 600 of FIG. 6 is the second electronic apparatus 300, the memory 620 may store identification information of the first electronic apparatus 100. Additionally, the memory 620 may store data for synchronizing with the first electronic apparatus 100.

The sensor 630 may acquire various types of information associated with the electronic apparatus 600. In particular, the sensor 630 may include a biometric recognition sensor (e.g., a fingerprint sensor, a camera, a microphone and the like) for acquiring biometric information of a user using the electronic apparatus 600. The sensor 630 may acquire biometric information such as fingerprint information, face information, iris information, voice information and the like through the biometric recognition sensor.

The display 640 may display various types of information. In particular, the display 640 may display information associated with an authentication process and a synchronization process of the electronic apparatus 600. For example, in the case where user authentication is successful, the display 640 may display an indicator indicating a success of user authentication, and in the case where synchronization is successful, the display 640 may display an indicator indicating a success of synchronization.

Meanwhile, the display 640 may be implemented as a liquid crystal display (LCD) panel, an organic light emitting diode (OLED) and the like, and in some cases, may also be implemented as a flexible display, a transparent display and the like. However, the display 640 according to the disclosure is not limited to a specific type of display.

The processor 650 may control the electronic apparatus 600 according to at least one instruction stored in the memory 620.

In particular, the processor 650 may include one or more processors. Specifically, one or more processors may include one or more of a central processing unit (CPU), a graphics processing unit (GPU), an accelerated processing unit (APU), Many Integrated Core (MIC), a digital signal processor (DSP), a neural processing unit (NPU), a hardware accelerator or a machine learning accelerator. One or more processors may control one among other elements of an electronic apparatus or any combination thereof, and perform an operation in association with communication or data processing. One or more processors may execute one or more programs or instructions stored in the memory. For example, the plurality of processors may execute one or more instructions stored in the memory to perform a method according to one embodiment of the disclosure.

In the case where the method according to one embodiment includes a plurality of operations, the plurality of operations may be performed by one processor, or by a plurality of processors. In other words, when a first operation, a second operation, and a third operation are performed based on the method according to one embodiment, the first operation, the second operation and the third operation may all be performed by a first processor, or the first operation and the second operation may be performed by the first processor (e.g., a generic-purpose processor), while the third operation may be performed by a second processor (e.g., an AI-exclusive processor).

The processor 650 may be implemented one or more multicore processors including a plurality of cores (e.g., homogeneous multi cores or heterogeneous multi cores). In the case where the processor 650 is implemented as a multicore processor, each of the plurality of cores included in the multicore processor may include processor internal memory such as cache memory, and on-chip memory, and common cache shared by the plurality of cores may be included in the multicore processor. Additionally, each of the plurality of cores (or part of the plurality of cores) included in the multicore processor may read and perform a program instruction for implementing the method according to one embodiment independently or in the way that all (or part) of the plurality of cores are linked.

In the case where the method according to one embodiment includes a plurality of operations, the plurality of operations may be performed by one of the plurality of cores or performed by the plurality of cores included in the multicore processor. For example, when a first operation, a second operation, and a third operation are performed based on the method according to one embodiment, the first operation, the second operation and the third operation may all be performed by a first core included in the multicore processor, or the first operation and the second operation may be performed by the first core included in the multicore processor, while the third operation may be performed by a second core included in the multicore processor.

In the embodiments of the disclosure, the processor may refer a system on a chip (SoC) where one or more processors and other electronic components are integrated, a single core processor, a multicore processor, or a core included in a single core processor or a multicore processor, and herein, the core may be implemented as a CPU, a GPU, an APU, an MIC, a DSP, an NPU, a hardware accelerator, or a machine learning accelerator, or the like, but embodiments of the core may not be limited thereto.

Meanwhile, in the case where the electronic 100 of FIG. 6, is the second electronic apparatus 300, the processor 650 may receive identification information of another electronic apparatus from another electronic apparatus through the communication interface 610 as biometric signature information is generated by another electronic apparatus based on first biometric information for authenticating the electronic apparatus and the identification information of another electronic apparatus. The processor 650 transmits the identification information received through the communication interface 610 to the server 200. The processor 650 receives the biometric signature information corresponding to the identification information from the server 200 through the communication interface 610. As second biometric information is acquired, the processor 650 generates biometric hash information for authenticating the electronic apparatus based on the acquired second biometric information and the biometric signature information. The processor 650 transmits the generated biometric hash information and the identification information to the server 200 through the communication interface 610.

In particular, the processor 650 may verify integrity of the received identification information based on information associated with a second public key included in the biometric signature information received from the server 200.

Additionally, as second biometric information is acquired after the integrity of the received identification information is verified, the processor 650 may identify whether the type of second biometric information is identical with the type of first biometric information included in the biometric signature information.

In the case where the type of second biometric information is identical with the type of first biometric information, the processor 650 may generate biometric hash information based on the second biometric information and an algorithm included in the biometric signature information. Additionally, the processor 650 may transmit the generated biometric hash information and the identification information to the server 200 through the communication interface.

Further, as the electronic apparatus is authenticated by the server, the processor 650 may transmit a signal for requesting synchronization to another electronic apparatus through the communication interface 610, and perform synchronization with another electronic apparatus.

Meanwhile, in the case where the electronic apparatus 100 of FIG. 6 is the first electronic apparatus 100, the processor 650 may acquire first biometric information through the biometric recognition sensor. Additionally, the processor 650 may generate identification information of the first electronic apparatus 100 based on information of the electronic apparatus. The processor 650 may generate biometric hash information for authenticating the electronic apparatus 100 based on the first biometric information and the identification information. Additionally, the processor 650 may generate a verification code for verifying the biometric hashed information. Additionally, the processor 650 may generate a key pair (a first public key, and a second public key and the like). Further, the processor 650 may generate biometric signature information based on the above information. Furthermore, the processor 650 may transmit the biometric signature information to the server 200 through the communication interface 610, and broadcast the identification information.

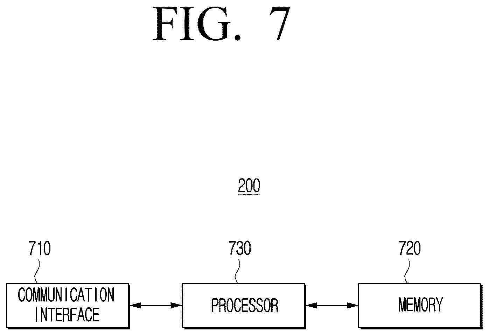

FIG. 7 is a block diagram illustrating a configuration of a server 200, according to one embodiment. As illustrated in FIG. 7, the server 200 may include a communication interface 710, memory 720 and a processor 730. However, the elements are described merely as one example, and depending on the type of server 200, some of the elements may certainly be removed or added.

The communication interface 710 may include at least one circuit and perform communication with various types of external electronic apparatuses. The communication interface 610 may include at least one of a Bluetooth Low Energy (BLE) module, a Wi-Fi communication module, a cellular communication module, a 3G (third generation) mobile communication module, a 4G (fourth generation) mobile communication module, a fourth generation Long Term Evolution (LTE) communication module, and a 5G (fifth generation) mobile communication module.

The communication interface 710 may receive biometric signature information from the first electronic apparatus 100. Additionally, the communication interface 710 may receive identification information of the first electronic apparatus 100 from the second electronic apparatus 300. Further, the communication interface 710 may transmit, to the server 200, the biometric signature information corresponding to the identification information of the first electronic apparatus 100. Furthermore, the communication interface 710 may receive biometric hash information generated based on the biometric signature information from the second electronic apparatus 300, and transmit an authentication result to the second electronic apparatus 300.

The memory 720 may store an operating system (OS) for controlling entire operations of the elements of the server 200 and instructions or data associated with the elements of the server 200. In particular, the memory 720 may include various types of modules for performing a function for authenticating the second electronic apparatus 300.

Meanwhile, the memory 620 may be implemented as non-volatile memory (e.g., a hard disk, solid state drive (SSD), flash memory), volatile memory (may include memory in the processor 730) and the like.

In particular, the memory 720 may store the identification information and the biometric signature information of the first electronic apparatus 100 in a pair form. Additionally, the memory 720 may store a verification code received from the first electronic apparatus 100.

The processor 730 may control the server 700 according to at least one instruction stored in the memory 720. In particular, the processor 730 may include one or more processors. Description in relation to this is provided with reference to FIG. 6, and is not repeated.

In particular, the processor 730 may receive the biometric signature information from the first electronic apparatus 100 through the communication interface 710. Additionally, the processor 730 may register the biometric signature information. At this time, the processor 730 may register the biometric signature information in the way that the biometric signature information are paired with the identification information of the first electronic apparatus 100. As a signal for requesting biometric signature information from the second electronic apparatus 300 is received, the processor 730 may transmit, to the second electronic apparatus 300, biometric signature information corresponding to the identification information of the first electronic apparatus through the communication interface 710. The processor 730 may receive biometric hash information and the identification information from the second electronic apparatus 300. Additionally, the processor 730 may input the identification information of the first electronic apparatus 100 to the verification code received from the first electronic apparatus 100 to generate the biometric hashed information, and compare the generated biometric hash information with the biometric hash information received from the second electronic apparatus 300 to authenticate the second electronic apparatus 300. Further, the processor 730 may transmit an authentication result to the second electronic apparatus 300 through the communication interface 710.

Meanwhile, the methods according to the embodiments set forth herein may be provided in a computer program product. The computer program product may be exchanged between a seller and a purchaser as a commodity. The computer program product may be distributed in the form of a machine-readable storage medium (e.g., compact disc read only memory (CD-ROM)), or distributed (e.g., downloaded or uploaded) online through an application store (e.g., Play StoreTM) or directly between two user devices (e.g., smartphones). In the case of online distribution, at least part of the computer program product (e.g., a downloadable app) may be stored at least temporarily, or generated temporarily in a machine-readable storage medium such as a server of a manufacturer, a server of an application store, or memory of a relay server.

The embodiments set forth herein may be implemented with software including instructions stored in a storage medium readable by a machine (e.g., a computer). The machine, as a device capable of calling the stored instructions from the storage media and operating according to the called instructions, may include the electronic apparatus (e.g., a TV) according to the disclosed embodiments.

The machine-readable storage medium may be provided in the form of a non-transitory storage medium. Herein, the "non-transitory storage medium" only means a tangible device and means including no signal (e.g., electromagnetic waves) while the term does distinguish semi-permanent or temporary storage of data in the storage medium. For example, the "non-transitory storage medium" may include a buffer where data are temporarily stored.

Based on the above-described instructions executed by a processor, the processor may perform functions corresponding to the instructions directly or by using other elements under the control of the processor. The instructions may include a code generated or executed by a compiler or an interpreter.

While the example embodiments of the disclosure are illustrated and described above, embodiments of the disclosure are not limited to the embodiments set forth herein, and certainly, various modifications thereof may be made by those skilled in the art to which the disclosure pertains, without departing from the scope of the subject matter of the disclosure claimed in the section of claims, and are not to be understood as separating from the technical spirit or prospect of the disclosure.

## Claims

1. An electronic apparatus comprising:
an input unit;
a communication unit;
a processor; and
memory,
the memory including instructions that cause the processor to:
based on occurrence of an event requesting settings of a first mode in which an artificial intelligence secretary function of another electronic apparatus is available, control the communication unit to request, from the another electronic apparatus, identification information including a call word for using the artificial intelligence secretary function;
in response to the request, receive the identification information from the another electronic apparatus through the communication unit; and
based on reception of a user command at a time of a first mode operation of the artificial intelligence secretary, control the communication unit to transmit a user command to the another electronic apparatus according to the identification information.

2. The control method of claim 1,
wherein the biometric signature information includes identification information of the first electronic apparatus, an algorithm for generating biometric hash information, information associated with a first public key for authenticating biometric signature information, and information associated with a second public key for synchronizing between electronic apparatuses.

3. The control method of claim 2, the method comprising:
generating, by the first electronic apparatus, a verification code including biometric hash information for comparing with biometric hash information generated by the second electronic apparatus, and
transmitting, the first electronic apparatus, the generated verification code together with the biometric signature information to the server.

4. The control method of claim 3, the method comprising:
verifying, by the second electronic apparatus, integrity of the received identification information based on information associated with the second public key included in biometric signature information received from the server.

5. The control method of claim 4, the method comprising:
identifying, by the second electronic apparatus, whether a type of the second biometric information is identical with a type of the first biometric information included in the biometric signature information based on acquisition of the second biometric information after verification of integrity of the received identification information.

6. The control method of claim 5,
wherein the transmitting the generated biometric hash information and the identification information to the serer comprising:
based on a type of the second biometric information being identical with a type of the first biometric information, generating, by the second electronic apparatus, the biometric hash information according to the second biometric information and the algorithm included in the biometric signature information; and
transmitting, by the second electronic apparatus, the generated biometric hash information and the identification information to the server.

7. The control method of claim 6,
wherein the authenticating comprising:
identifying, by the server, whether biometric hash information acquired by driving a verification code corresponding to the identification information matches biometric hash information generated by the second electronic apparatus; and
authenticating, by the server, the second electronic apparatus based on the identification result.

8. The control method of claim 1, the method comprising:
based on authentication of the second electronic apparatus, transmitting, by the second electronic apparatus, a signal for requesting synchronization to the first electronic apparatus; and
performing, by the first electronic apparatus, synchronization with the second electronic apparatus in response to the signal.

9. The control method of claim 1,
wherein the server is comprised of distributed ledger-based blockchain nodes, and
the identification information and the biometric signature information are registered in a distributed ledger on the blockchain in a way that the identification information and the biometric signature information are paired with each other.

10. An electronic apparatus comprising;
a communication interface;
memory; and
a processor,
the processor is configured to:
based on another electronic apparatus generating biometric signature information according to first biometric information for authentication of an electronic apparatus and identification information of the another electronic apparatus, receive identification information of the another electronic apparatus from the another electronic apparatus through the communication interface;
transmit the received identification information to a server through the communication interface;
receive the biometric signature information corresponding to the identification information from the server through the communication interface;
based on acquisition of second biometric information, generate biometric hash information for authenticating the electronic apparatus according to the acquired second biometric information and the biometric signature information; and
transmit the generated biometric hash information and the identification information to the server through the communication interface.

11. The electronic apparatus of claim 10,
wherein the biometric signature information includes identification information of the another electronic apparatus, an algorithm for generating biometric hashed information, information associated with a first public key for authenticating biometric signature information, and information associated with a second public key for synchronizing between electronic apparatuses.

12. The electronic apparatus of claim 11,
wherein the another electronic apparatus generates a verification code including biometric hash information for comparing with biometric hash information generated by the electronic apparatus, and
the another electronic apparatus transmits the generated verification code together with the biometric signature information to the server.

13. The electronic apparatus of claim 12,
wherein the processor verifies, based on information associated with the second public key included in biometric signature information received from the server, integrity of the received identification information.

14. The electronic apparatus of claim 13,
wherein the processor identifies, based on acquisition of the second biometric information after verification of integrity of the received identification information, whether a type of the second biometric information is identical with a type of the first biometric information included in the biometric signature information.

15. The electronic apparatus of claim 14,
wherein the processor generates, based on a type of the second biometric information being identical with a type of the first biometric information, the biometric hash information according to the second biometric information and the algorithm included in the biometric signature information, and
the processor transmits the generated biometric hash information and the identification information to the server through the communication interface.
